# EUROPÄISCHE PATENTSCHRIFT

(11) **EP 2 882 631 B1**
(45) Veröffentlichungstag und Bekanntmachung des Hinweises auf die Patenterteilung: **04.05.2016**
(21) Anmeldenummer: 13745615.8
(22) Anmeldetag: 25.07.2013
(51) Int. Cl.: B62D 1/16, F16D 3/78

(54) **LENKSÄULE EINES FAHRZEUGS**
STEERING COLUMN OF A VEHICLE
COLONNE DE DIRECTION D'UN VÉHICULE

(30) Priorität: 08.08.2012 DE 102012214073
(43) Veröffentlichungstag der Anmeldung: 17.06.2015
(73) Patentinhaber: Bayerische Motoren Werke Aktiengesellschaft, 80809 München (DE)
(72) Erfinder: LINKE, Martin, 80639 München (DE); SCHÖLZEL, Matthias, 81369 Muenchen (DE)
(86) Internationale Anmeldenummer: PCT/EP2013/065770
(87) Internationale Veröffentlichungsnummer: WO 2014/023585

(56) Entgegenhaltungen:
- EP-B1- 1 080 316
- JP-A- S63 101 523

## Beschreibung

Die Erfindung betrifft eine Lenksäule eines Fahrzeugs mit einem ersten und einem zweiten Wellenteil, die über eine kreuzgelenkartige Gelenkanordnung, welche eine erste und eine zweite gummielastische Gelenkscheibe aufweist, in Axialrichtung betrachtet hintereinander und ohne elastische Verformung der Gelenkscheiben im Rahmen üblicher Toleranzen koaxial zueinander angeordnet miteinander verbunden sind. Zum Stand der Technik wird auf die EP 1 080 316 B1 verwiesen.

Elastische Gelenkscheiben - oftmals auch Hardyscheiben genannt - werden in Wellenverbindungen zum Toleranzausgleich insbesondere auch hinsichtlich eines Winkels zwischen den Längsachsen der miteinander zu verbindenden Wellen sowie zur Bedämpfung von Schwingungen jeglicher Art vorgesehen, wobei solche Gelenkscheiben auch einer Entkoppelung der beiden Wellen hinsichtlich einer unerwünschten Schwingungsübertragung dienen können. Diese Erläuterung gilt grundsätzlich auch für die Anordnung von elastischen Gelenkscheiben in Lenksäulen von Kraftfahrzeugen, wo zumeist über ein Kreuzgelenk zwei Wellenteile - aus Einbaugründen im Motorraum eines Kraftfahrzeugs unter einem Beugungswinkel - miteinander verbunden sind, nämlich ein erstes mit dem Lenkrad des Fahrers verbundenes Wellenteil und ein zweites an ein Lenkgetriebe angeschlossenes Wellenteil, von welchem Lenkgetriebe aus sog. Spurstangen zu den lenkbaren Rädern des Fahrzeugs führen.

Ein Beispiel für eine elastische Wellenkupplung in einer Lenksäule eines Kraftfahrzeugs ist in der o.g. EP 1 080 316 B1 gezeigt, wobei nicht nur eine, sondern zwei elastische Gelenkscheiben in Lenksäulen-Achsrichtung betrachtet quasi hintereinander angeordnet vorgesehen sind. Dabei sind diese Gelenkscheiben innerhalb von Rohrstücken, die Bestandteile eines ersten bzw. zweiten Wellenteils - gemäß der Terminologie der vorliegenden Anmeldung/Erfindung - sind, angeordnet. Die beiden Rohrstücke greifen axial mit Spiel ineinander ein, wobei das Spiel so bemessen ist, dass die Rohrstücke begrenzt gegeneinander kippbar sind. Dies dürfte dem weiter oben genannten Toleranzausgleich dienen.

Mit vorliegender Erfindung wurde erkannt, dass sich unter Verwendung zweier quasi hintereinander angeordneter elastischer Gelenkscheiben in einer Fahrzeug-Lenksäule, die jedoch andersartig als im zitierten Stand der Technik verbaut sind, eine äußerst vorteilhafte zusätzliche Funktion darstellen lässt, die in diesem Stand der Technik nicht gezeigt ist. Insofern ist es Aufgabe der vorliegenden Erfindung, eine vorteilhafte Weiterentwicklung des Standes der Technik aufzuzeigen.

Die Lösung dieser Aufgabe ist für eine Lenksäule nach dem Oberbegriff des Anspruchs 1 dadurch gekennzeichnet, dass zwischen den beiden Gelenkscheiben ein von den beiden Wellenteilen hinsichtlich seiner Bewegbarkeit unabhängiges Zwischenstück vorgesehen ist und über die Gelenkscheiben derart kreuzgelenkartig mit den Wellenteilen verbunden ist, dass im Einbauzustand der Lenksäule in einer geeigneten Seitenansicht betrachtet die Drehachsen der beiden Wellenteile aufgrund elastischer Verformung der beiden Gelenkscheiben einen Beugewinkel der Lenksäule einschließen oder bilden. Vorteilhafte Aus- und Weiterbildungen sind Inhalt der Unteransprüche.

Erfindungsgemäß ist mit zwei elastischen Gelenkscheiben und einem dazwischenliegenden Zwischenstück, welches über diese Gelenkscheiben nach beiden Seiten hin jeweils nach Art eines Kreuzgelenks mit den beiden Wellenteilen verbunden ist, ein Kreuzgelenk geschaffen, welches gleichzeitig eine schwingungstechnische Entkoppelungsfunktion beinhaltet, nämlich über die elastischen Gelenkscheiben. Und es bilden diese elastischen Gelenkscheiben gleichzeitig in Zusammenwirken mit dem einfachen Zwischenstück unter elastischer Verformung ein Kreuzgelenk, so dass ansonsten für typische Kreuzgelenke erforderliche Drehlager oder dgl. nicht benötigt werden. Es ist lediglich erforderlich, jede elastische Gelenkscheibe einerseits mit ihrem zugeordneten Wellenteil und andererseits mit dem zwischen den beiden Gelenkscheiben angeordneten Zwischenstück kreuzgelenkartig zu verbinden, woraufhin das Zwischenstück unter elastischer Verformung der jeweiligen Gelenkscheibe gegenüber dem auf der anderen Seite dieser Gelenkscheibe angeordneten Wellenteil im Rahmen der Verformungsmöglichkeit der jeweiligen Gelenkscheibe bewegbar ist.

Eine kreuzgelenkartige Verbindung zwischen zwei Wellen oder dgl. bzw. vorliegend über eine erste elastisch verformbare Gelenkscheibe zwischen einem ersten Wellenteil und dem erfindungsgemäßen Zwischenstück bzw. anschließend hieran zwischen dem Zwischenstück über die zweite gummielastische Gelenkscheibe und dem/einem zweiten Wellenteil ist bekanntlich dadurch gekennzeichnet, dass im nicht gebeugten Zustand in Achsrichtung eines der Wellenteile betrachtet in einer ersten in einer gewissen Drehwinkel-Position der Wellen-Verbindung beispielsweise horizontalen Ebene beidseitig der (ersten) Wellen-Drehachse und dabei von dieser etwas beabstandet eine erste Verbindung (vorliegend zwischen dem Wellenteil und der Gelenkscheibe) besteht, und dass in einer zweiten im Beispiel vertikalen Ebene, die allgemein senkrecht zur ersten Ebene steht, ebenfalls beidseitig der Wellen-Drehachse und dabei von dieser etwas beabstandet eine zweite Verbindung vorliegend zwischen der Gelenkscheibe und dem erfindungsgemäßen Zwischenstück besteht. Senkrecht zur quasi gemeinsamen Wellen-Drehachse betrachtet können die genannte erste Verbindung und die genannte zweite Verbindung in einer gemeinsamen Ebene liegen, jedoch ist dies keineswegs zwingend. Vielmehr können die genannten Verbindungen jeweils senkrecht zur Drehachse der Wellen-Verbindung betrachtet auch in voneinander beabstandeten Ebenen liegen, d.h. in Drehachsrichtung hintereinander angeordnet sein.

Bei einer erfindungsgemäßen Lenksäule sind nun zwei sog. "Quasi-Kreuzgelenke", die durch die beiden gummielastischen Gelenkscheiben gebildet sind, vorgesehen und in Achsrichtung der Lenksäule betrachtet hintereinander angeordnet, nämlich ein erstes "Quasi-Kreuzgelenk" zwischen dem ersten Wellenteil und dem erfindungsgemäßen Zwischenstück, sowie ein zweites "Quasi-Kreuzgelenk" zwischen dem Zwischenstück und dem zweiten Wellenteil. Der Vollständigkeit halber sei ausdrücklich erwähnt, dass mit solchen "Quasi-Kreuzgelenken" bzw. solchen kreuzgelenkartigen Verbindungen nicht nur das erfindungsgemäße Zwischenstück gegenüber den beiden Wellenteilen (im Rahmen der Verformungsmöglichkeiten der Gelenkscheiben) bewegbar ist, sondern dass damit auch eine durch die Verformungsmöglichkeiten der Gelenkscheiben beschränkte Bewegbarkeit jeder Gelenkscheibe gegenüber dem ihr (über die kreuzgelenkartige Befestigung) zugeordneten Wellenteil sowie gegenüber dem Zwischenstück besteht.

Eine kreuzgelenkartige Verbindung ist im übrigen auch im genannten Stand der Technik enthalten, jedoch ist dort zwischen den beiden Wellenteilen kein von diesen getrenntes bzw. im Rahmen der Verformungs-Möglichkeiten der Gelenkscheiben unabhängig von den Wellenteilen bewegbares Zwischenstück vorgesehen. Während sich daher mit einer erfindungsgemäßen Lenksäule im Einbauzustand derselben in einem Kraftfahrzeug ein Beugewinkel von nennenswertem Betrag zwischen den beiden Wellenteilen darstellen lässt, ist dies beim genannten Stand der Technik nicht möglich. Dort ist aufgrund des genannten geringen Spiels zwischen den im Verbindungsbereich ineinander greifenden Wellenteilen (= dort sog. "Rohrstücken") allenfalls ein geringfügiger Toleranzausgleich möglich, jedoch kein Beugewinkel von nennenswerter Größe darstellbar.

Mit der vorliegenden Erfindung hingegen ist mit den beiden jeweils ein "Quasi-Kreuzgelenk" bildenden Gelenkscheiben unter üblichen Abmessungen ein Beugewinkel in der Größenordnung von 20° darstellbar, der sich aus Teil-Beugewinkeln von jeweils ca. 10° in jedem "Quasi-Kreuzgelenk" zusammensetzt. Teil-Beugewinkel in dieser Größenordnung sind mit für Lenksäulen im wesentlichen üblich bemessenen Gelenkscheiben insbesondere dann leicht darstellbar, wenn die ersten Verbindungen zwischen der Gelenkscheibe und dem jeweiligen Wellenteil einerseits und die zweiten Verbindungen zwischen der Gelenkscheibe und dem erfindungsgemäßen Zwischenstück andererseits auf verschieden Seiten einer Gelenkscheibe und somit Achsrichtung der Lenksäule bzw. Drehachsrichtung des jeweiligen Wellenteils betrachtet voneinander beabstandet, d.h. quasi hintereinander vorgesehen sind.

Vorzugsweise ist die Anordnung der beiden Gelenkscheiben und des von den Wellenteilen (im Rahmen der Verformungsmöglichkeiten der Gelenkscheiben) unabhängig bewegbaren Zwischenstücks so wie im wesentlichen in Anspruch 2 angegeben getroffen, nämlich dass in Achsrichtung der nicht im Fahrzeug verbauten Lenksäule und somit ohne elastische Verformung der Gelenkscheiben betrachtet die Verbindung zwischen dem ersten Wellenteil und der ersten Gelenkscheibe durch zwei in einer die Drehachse des ersten Wellenteils enthaltenden ersten Ebene beidseitig dieser Drehachse vorgesehene Verbindungselemente, die sich vorzugsweise in Drehachsrichtung erstrecken, hergestellt ist, während die Verbindung zwischen der ersten Gelenkscheibe und dem Zwischenstück durch zwei in einer zur ersten Ebene senkrechten und ebenfalls die Drehachse des ersten Wellenteils enthaltenden zweiten Ebene beidseitig dieser Drehachse vorgesehene Verbindungselemente, die sich vorzugsweise (ebenfalls) in Drehachsrichtung erstrecken hergestellt ist. In analoger Weise kann die Verbindung zwischen dem Zwischenstück und der zweiten Gelenkscheibe durch zwei in einer die Drehachse des zweiten Wellenteils enthaltenden dritten Ebene beidseitig der Drehachse des zweiten Wellenteils vorgesehene Verbindungselemente, die sich vorzugsweise in Drehachsrichtung des zweiten Wellenteils erstrecken, hergestellt sein, während die Verbindung zwischen der zweiten Gelenkscheibe und dem zweiten Wellenteil durch zwei in einer zur dritten Ebene senkrechten und die Drehachse des zweiten Wellenteils enthaltenden vierten Ebene beidseitig dieser Drehachse vorgesehene Verbindungselemente, die sich vorzugsweise ebenfalls in Drehachsrichtung erstrecken, hergestellt sein.

Aus dieser Darstellung wird deutlich, dass die Lenksäule im nicht im Fahrzeug eingebauten Zustand keinen nennenswerten Beugewinkel aufweist und somit die beiden Wellenteile zumindest im wesentlichen koaxial zueinander liegen, und dass der Beugewinkel erst an der im Fahrzeug verbauten Lenksäule unter elastischer Verformung der gummielastischen Gelenkscheiben entsteht, wobei sich die entsprechenden Verformungen jeder einzelnen Gelenkscheibe in Form von Teil-Beugewinkeln zu einem betragsmäßig größeren Summen-Beugewinkel der erfindungsgemäßen Lenksäule addieren. Das Maximum des Summen-Beugewinkels wird dann erzielt, wenn bei nicht im Fahrzeug verbauter Lenksäule die im vorhergehenden Absatz genannte erste Ebene und die dort genannte dritte Ebene im wesentlichen, d.h. im Rahmen üblicher Toleranzen, zusammenfallen und die zweite und die vierte Ebene im wesentlichen, d.h. im Rahmen üblicher Toleranzen, zusammenfallen.

Um die einzelnen soeben genannten Teil-Beugewinkel zwischen jeder Gelenkscheibe bzw. dem zugeordneten Wellenteil und dem erfindungsgemäßen Zwischenstück kollisionsfrei darstellen zu können, können im oder am Zwischenstück, aber auch oder alternativ an den Gelenkscheiben und den Wellenteilen Aussparungen oder Distanzelemente vorgesehen sein. Distanzelemente (auch bauteilintegriert möglich) halten die betroffenen Bauteile ausreichend weit voneinander beabstandet, während Aussparungen eine Kollision direkt vermeiden.

Eine besonders vorteilhafte Weiterbildung der Erfindung beschreibt Anspruch 5, wonach die beiden Gelenkscheiben unterschiedlich gestaltet sind, derart, dass diese hinsichtlich einer schwingungstechnischen und insbesondere akustischen Entkopplung der beiden Wellenteile voneinander auf unterschiedliche Wirkbereiche und insbesondere unterschiedliche Frequenzen oder Frequenzbänder ausgelegt sind bzw. ausgelegt sein können. Bekanntlich können gummielastische Schwingungs-Entkopplungselemente auf besonders hohe Wirksamkeit in einem bestimmten Frequenzband ausgelegt sein, was bspw. durch geeignete Materialauswahl, Härte, Formgebung und vieles mehr erfolgen kann. Da nun vorliegend zumindest zwei Stück solcher gummielastischer Gelenkscheiben vorgesehen sind, ist es möglich, diese hinsichtlich einer besonders wirksamen Entkopplung in unterschiedlichen Frequenzbereichen auszulegen, so dass eine erfindungsgemäße Lenksäule in ihrer Gesamtheit hinsichtlich eines besonders breiten Frequenzbandes schwingungs-entkoppelt ausgelegt werden kann, indem sich die beiden gelenkscheibenindividuellen Frequenzbänder quasi addieren.

Die beigefügten Prinzipskizzen zeigen vereinfacht und auf das wesentliche abstrahiert ein Ausführungsbeispiel der vorliegenden Erfindung. Dabei zeigt **Figur 1** den wesentlichen Abschnitt einer erfindungsgemäßen Lenksäule in Seitenansicht im nicht im Fahrzeug verbauten Zustand und **Figur 2** diesen Abschnitt im Schnitt in einer um 90° um die Längsachse dieses Abschnitts verdrehten Lage. **Figur 3** zeigt diesen Abschnitt im im Fahrzeug verbauten Zustand und **Figur 4** zeigt verschiedene Ansichten eines erfindungsgemäßen Zwischenstücks. Die **Figuren 5, 6** zeigen weitere Ansichten der nicht im Fahrzeug verbauten Lenksäule unter verschiedenen Drehwinkeln um die Längsachse dieses Abschnitts, wobei **Fig.6** eine leicht perspektivische Ansicht zeigt.

Mit der Bezugsziffer 1 ist ein erstes Wellenteil einer Lenksäule eines Kraftfahrzeugs und mit der Bezugsziffer 2 ein zweites Wellenteil dieser Lenksäule gekennzeichnet, von welcher nur derjenige Bereich oder Abschnitt, in dem diese beiden Wellteile 1, 2 in Richtung von deren Drehachse 1 a, 2a betrachtet hintereinander angeordnet miteinander verbunden sind, dargestellt ist. Diese Wellen-Verbindung ist dabei kreuzgelenkartig gestaltet und besteht aus zwei gummielastischen Gelenkscheiben 3, 4 und einem zwischen diesen Gelenkscheiben 3, 4 angeordneten Zwischenstück 5, sowie mehreren vereinfacht dargestellten Verbindungselementen 6-x (mit x= 1, 2, 3, 4) zwischen den soweit genannten Bauelementen Diese Verbindungselemente 6-x können beispielsweise nach Art von Schraubenbolzen mit endseitig aufgebrachten Muttern ausgebildet sein und erstrecken sich vorranging zumindest annähernd in Achsrichtung der Lenksäule, es ist jedoch jede beliebige Art eines geeigneten üblichen Verbindungselements möglich.

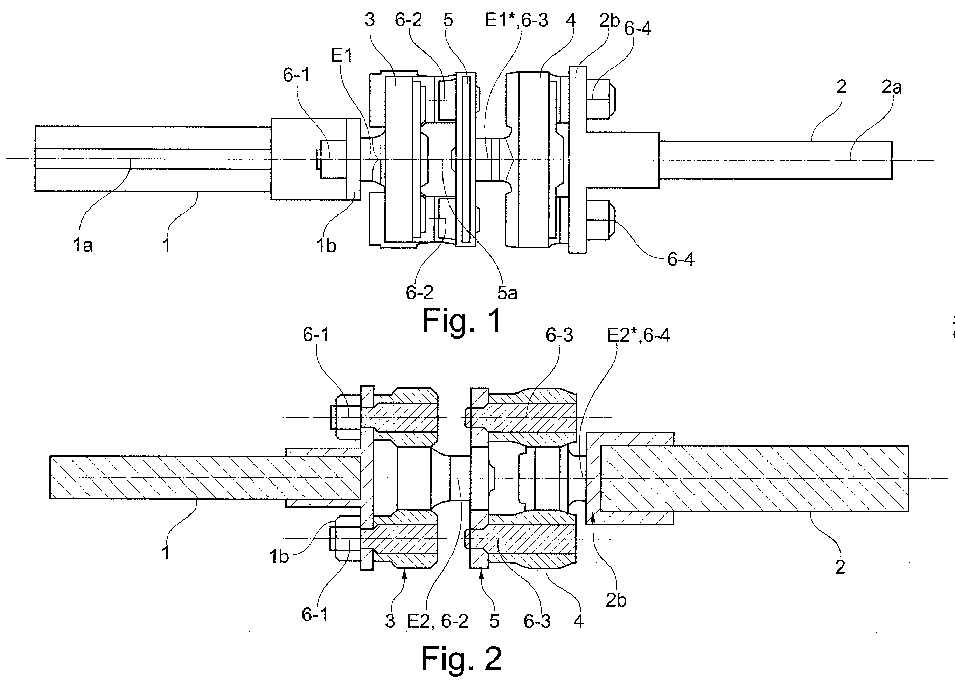

Zunächst auf die **Figuren 1, 2** Bezug nehmend, in denen der gezeigte Abschnitt der Lenksäule im nicht im Fahrzeug verbauten Zustand dargestellt ist und in welchem die Drehachsen 1a, 2a der beiden Wellenteile 1, 2 zusammenfallen und dabei die oben genannte Längsachse dieses Abschnitts und die Achse der Lenksäule bilden, erkennt man im Verbindungsbereich der beiden Wellenteile 1, 2 am quasi freien Ende jedes Wellenteils 1, 2 ein Verbindungsflansch 1b, 2b. In Achsrichtung der Lenksäule betrachtet ist die Verbindung zwischen dem ersten Wellenteil 1 und der sich daran anschließenden ersten Gelenkscheibe 3 durch zwei in einer ersten die Drehachse 1 a des ersten Wellenteils 1 a enthaltenden ersten Ebene E1, die sich in der in **Figur 1** dargestellten Drehwinkel-Position der Lenksäule senkrecht zur Zeichenebene erstreckt und die in der in **Figur 2** dargestellten Drehwinkel-Position der Lenksäule in der Zeichenebene liegt, beidseitig dieser Drehachse 1a vorgesehene Verbindungselemente 6-1, die sich in Richtung der Drehachse 1a erstrecken, hergestellt.

Auf der anderen (hier rechten) Seite dieser dem ersten Wellenteil 1 zugeordneten Gelenkscheibe 3 ist die Verbindung zwischen dieser ersten Gelenkscheibe 3 und dem Zwischenstück 5 durch zwei in einer zur ersten Ebene E1 senkrechten und die Drehachse 1a des ersten Wellenteils 1 enthaltenden zweiten Ebene E2 beidseitig dieser Drehachse 1 a vorgesehene und sich annähernd in Richtung der Drehachse 1a erstreckende Verbindungselemente 6-2 hergestellt. Diese zur Ebene E1 senkrechte Ebene E2 liegt in **Figur 1** mit der dort dargestellten Drehwinkel-Position der Lenksäule in der Zeichenebene und erstreckt sich in **Figur 2** mit der dort dargestellten Drehwinkel-Position der Lenksäule senkrecht zur Zeichenebene.

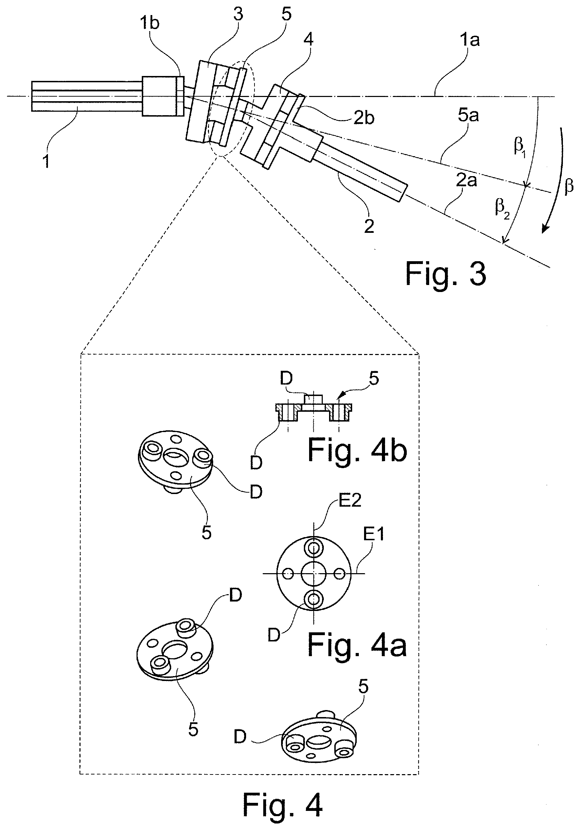

Im nicht eingebauten Zustand der Lenksäule gemäß **Figuren 1, 2** kann eine Drehachse 5a des Zwischenstücks 5 als Verbindungslinie zwischen der Drehachse 1 a des ersten Wellenteils 1 und der Drehachse 2a des zweiten Wellenteils 2 definiert werden. Im Einbauzustand der Lenksäule im Fahrzeug gemäß **Figur 3** schließt diese Drehachse 5a des Zwischenstücks 5 mit der Drehachse 1a des ersten Wellenteils 1 einen Teil-Beugewinkel β1 (in der Größenordnung von 10°) ein, der sich aus einem entsprechenden Einbau der beiden Wellenteile 1, 2 im Fahrzeug und einer daraus resultierenden elastischen Verformung der ersten Gelenkscheibe 3 ergibt.

Nun wieder auf die **Figuren 1, 2** zurückkommend ist eine Verbindung zwischen dem Zwischenstück 5 und der sich in Richtung zum zweiten Wellenteil 2 hin daran anschließenden zweiten Gelenkscheibe 4 durch zwei in einer ersten die Drehachse 5a des Zwischenstücks 5 und im nicht im Fahrzeug eingebauten Zustand die Drehachse 2a des zweiten Wellenteils 2a enthaltenden dritten Ebene E1* beidseitig dieser Drehachse 2a vorgesehene Verbindungselemente 6-3, die sich in Richtung der Drehachse 5a und zumindest näherungsweise in Richtung der Drehachse 2a erstrecken, hergestellt. Im nicht im Fahrzeug verbauten Zustand der Lenksäule gemäß Figuren 1, 2 fällt die dritte Ebene E1* im Rahmen üblicher Toleranzen mit der ersten Ebene E1 zusammen, so dass sich diese dritte Ebene in **Figur 1** senkrecht zur Zeichenebene erstreckt und in **Figur 2** in der Zeichenebene liegt.

Auf der anderen Seite dieser dem zweiten Wellenteil 2 zugeordneten Gelenkscheibe 4 ist die Verbindung zwischen dieser zweiten Gelenkscheibe 4 und dem zweiten Wellenteil 2 durch zwei in einer zur dritten Ebene E1* senkrechten und die Drehachse 2a des zweiten Wellenteils 2 enthaltenden vierten Ebene E2* beidseitig dieser Drehachse 2a vorgesehene und sich in Richtung der Drehachse 2a erstreckende Verbindungselemente 6-4 hergestellt. Die zur Ebene E1* senkrechte Ebene E2* liegt in **Figur 1** mit der darin dargestellten Drehwinkel-Position dieses Lenksäulen-Abschnitts in der Zeichenebene und erstreckt sich in **Figur 2** mit der darin dargestellten Drehwinkel-Position dieses Lenksäuen-Abschnitts senkrecht zur Zeichenebene. Im übrigen fällt im nicht im Fahrzeug verbauten Zustand der Lenksäule gemäß **Figuren 1, 2** die vierte Ebene E2* im Rahmen üblicher Toleranzen mit der zweiten Ebene E2 zusammen.

In **Figur 3** ist die Lenksäule im Einbauzustand im Fahrzeug unter elastischer Verformung der beiden Gelenkscheiben 3, 4 dargestellt, weshalb hier die Merkmale des Anspruchs 2 im Wortlaut nicht identisch wiedergegeben werden können, da Anspruch 2 die nicht im Fahrzeug verbaute Lenksäule beschreibt, bei welcher die Drehachsen 1a, 2a der beiden Wellenteile 1, 2 jedenfalls innerhalb üblicher Toleranzen ineinander fallen, d.h. im nicht verbauten Zustand liegen die beiden Wellenteile 1, 2 koaxial hintereinander, so wie dies in den **Figuren 1, 2****,** **5 und 6** dargestellt ist. Im Einbauzustand der Lenksäule im Fahrzeug ist dies jedoch anders, wie **Figur 3** zeigt. Hier existiert zwischen den beiden Wellenteilen 1, 2 ein Beugewinkel β in der Größenordnung von 20°, der sich aus dem weiter oben bereits genannten Teil-Beugewinkel β1 zwischen der Drehachse 1a des ersten Wellenteils 1 und der Drehachse 5a des Zwischenstücks sowie einem weiteren Teil-Beugewinkel β2 ergibt. Im Einbauzustand der Lenksäule im Fahrzeug gemäß **Figur 3** schließt nämlich die Drehachse 5a des Zwischenstücks 5 mit der Drehachse 2a des zweiten Wellenteils 2 einen Teil-Beugewinkel β2 (in der Größenordnung von 10°) ein, der sich ebenfalls aus dem entsprechenden Einbau der beiden Wellenteile 1, 2 im Fahrzeug und einer daraus resultierenden elastischen Verformung auch der zweiten Gelenkscheibe 4 ergibt. Die beiden Teil-Beugewinkel β1 und β2 addieren sich zum bereits genannten größeren (Summen)-Beugewinkel β der Lenksäule.

**Figur 4** zeigt (quasi in einem vergrößerten Ausschnitt von Fig.3) das Zwischenstück 5 in verschiedenen Ansichten, wobei **Fig.4a** eine Aufsicht zeigt, in der die beiden genannten senkrecht aufeinander stehenden Ebenen E1, E2 dargestellt sind. **Figur 4b** zeigt einen Schnitt durch das Zwischenstück in der Ebene E1. In den Darstellungen von **Figur 4** erkennt man ferner auf der Oberfläche des ansonsten scheibenförmigen Zwischenstücks vorgesehene sogenannte Distanzelemente D, die vorliegend bauteil-integriert sind und die die genannten Teil-Beugewinkel β1, β2 zwischen den betroffenen, einander benachbarten Bauteilen kollisionsfrei ermöglichen.

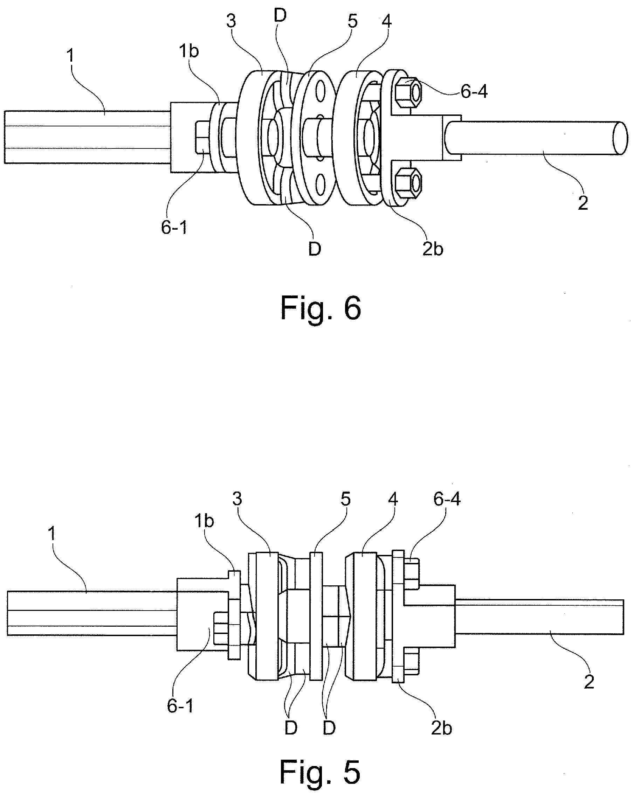

Solche Distanzelemente D können vorliegend auch in den Gelenkscheiben 3, 4 zumindest auf deren dem Zwischenstück 5 zugewanden Seite im Bauteil integriert vorgesehen sein, vgl. das entsprechende Bezugszeichen in **Figur 5, 6****,** in denen der Übersichtlichkeit halber nur einige der Bezugsziffern eingetragen sind. Alternativ können solche Distanzelemente D auch durch eigenständige, separate Bauteile gebildet sein. Im übrigen sind noch eine Vielzahl weiterer Abwandlungen von obigen Ausführungen bzw. vom gezeigten Ausführungsbeispiel möglich, ohne den Inhalt der Patentansprüche zu verlassen. Insbesondere können in einer Lenksäule anschließend an ein solches Paar von gummielastischen Gelenkscheiben 3, 4 mit einem dazwischen liegenden Zwischenstück 5 noch ein weiteres Zwischenstück und anschließend daran einer weitere gummielastischen Gelenkscheibe in analoger Weise angeordnet und wirkend vorgesehen sein

## Patentansprüche

1. Lenksäule eines Fahrzeugs mit einem ersten und einem zweiten Wellenteil (1, 2), die über eine kreuzgelenkartige Gelenkanordnung, welche eine erste und eine zweite gummielastische Gelenkscheibe (3, 4) aufweist, in Axialrichtung betrachtet hintereinander und ohne elastische Verformung der Gelenkscheiben (3, 4) im Rahmen üblicher Toleranzen koaxial zueinander angeordnet miteinander verbunden sind,
**dadurch gekennzeichnet, dass** zwischen den beiden Gelenkscheiben (3, 4) ein von den beiden Wellenteilen (1, 2) hinsichtlich seiner Bewegbarkeit unabhängiges Zwischenstück (5) vorgesehen ist und über die Gelenkscheiben (3, 4) derart kreuzgelenkartig mit den Wellenteilen (1, 2) verbunden ist, dass im Einbauzustand der Lenksäule in einer geeigneten Seitenansicht betrachtet die Drehachsen (1a, 2a) der beiden Wellenteile (1, 2) aufgrund elastischer Verformung der beiden Gelenkscheiben (3, 4) einen Beugewinkel (β) der Lenksäule einschließen.

2. Lenksäule nach Anspruch 1, wobei die kreuzgelenkartige Verbindung dadurch dargestellt ist, dass in Achsrichtung der nicht im Fahrzeug verbauten Lenksäule und somit ohne elastische Verformung der Gelenkscheiben (3, 4) betrachtet die Verbindung zwischen dem ersten Wellenteil (1) und der ersten Gelenkscheibe (3) durch zwei in einer die Drehachse (1 a) des ersten Wellenteils (1) enthaltenden ersten Ebene (E1) beidseitig dieser Drehachse (1a) vorgesehene Verbindungselemente (6-1) hergestellt ist, während die Verbindung zwischen der ersten Gelenkscheibe (3) und dem Zwischenstück (5) durch zwei in einer zur ersten Ebene (E1) senkrechten und ebenfalls die Drehachse (1 a) des ersten Wellenteils (1) enthaltenden zweiten Ebene (E2) beidseitig dieser Drehachse (1a) vorgesehene Verbindungselemente (6-2) hergestellt ist, und dass die Verbindung zwischen dem Zwischenstück (5) und der zweiten Gelenkscheibe (4) durch zwei in einer die Drehachse (2a) des zweiten Wellenteils (2) enthaltenden dritten Ebene (E1*) beidseitig der Drehachse (2a) des zweiten Wellenteils (2) vorgesehene Verbindungselemente (6-3) hergestellt ist, während die Verbindung zwischen der zweiten Gelenkscheibe (4) und dem zweiten Wellenteil (2) durch zwei in einer zur dritten Ebene (E1*) senkrechten und die Drehachse (2a) des zweiten Wellenteils (2) enthaltenden vierten Ebene (E2*) beidseitig dieser Drehachse (2a) vorgesehene Verbindungselemente (6-4) hergestellt ist.

3. Lenksäule nach Anspruch 2, wobei bei nicht im Fahrzeug verbauter Lenksäule die erste Ebene (E1) und die dritte Ebene (E1*) im wesentlichen (d.h. im Rahmen üblicher Toleranzen) zusammenfallen und die zweite Ebene (E2) und die vierte Ebene (E2*) im wesentlichen zusammenfallen.

4. Lenksäule nach einem der vorangegangenen Ansprüche, wobei im oder am Zwischenstück (5) und/oder an der/den Gelenkscheibe(n) (3, 4) Aussparungen oder Distanzelemente (D) vorgesehen sind, die den in Anspruch 1 genannten Beugewinkel der Lenksäule ohne Kollision zwischen Gelenkscheibe (3, 4) und Zwischenstück (5) oder zwischen Gelenkscheibe (3, 4) und zugeordnetem Wellenteil (1, 2) ermöglichen.

5. Lenksäule nach einem der vorangegangenen Ansprüche, **dadurch gekennzeichnet, dass** die beiden Gelenkscheiben (3, 4) unterschiedlich gestaltet sind, derart, dass diese hinsichtlich der akustischen Entkopplung auf unterschiedliche Wirkbereiche, insbesondere unterschiedliche Frequenzen, ausgelegt sind.

## Claims

1. A steering column of a vehicle with a first and a second shaft part (1, 2) which are interconnected by a universal joint-like joint arrangement having a first and a second flexible rubber joint disc (3, 4), the shaft parts being arranged coaxially to one another, viewed in the axial direction, one behind the other and without elastic deformation of the joint discs (3, 4) within usually tolerances, **characterised in that** provided between the two joint discs (3, 4) is an intermediate piece (5) which is independent of the two shaft parts (1, 2) with regard to its mobility and which is connected to the shaft parts (1, 2) in the manner of a universal joint by the joint discs (3, 4), such that when the steering column is fitted, seen in a suitable side view, the rotational axes (1a, 2a) of the two shaft parts (1, 2) include a bending angle (β) of the steering column due to elastic deformation of the two joint discs (3, 4).

2. A steering column according to claim 1, wherein the universal joint-like connection is presented such that seen in the axial direction of the steering column not fitted in the vehicle and thus without elastic deformation of the joint discs, the connection between the first shaft part (1) and the first joint disc (3) is produced by two connection elements (6-1) provided in a first plane (E1) containing the rotational axis (1 a) of the first shaft part (1), on both sides of this rotational axis (1a), while the connection between the first joint disc (3) and the intermediate piece (5) is produced by two connection elements (6-2) provided in a second plane (E2), vertical to the first plane (E1) and also containing the rotational axis (1a) of the first shaft part (1), on both sides of this rotational axis (1a), and in that the connection between the intermediate piece (5) and the second joint disc (4) is produced by two connection elements (6-3) provided in a third plane (E1*) containing the rotational axis (2a) of the second shaft part (2), on both sides of the rotational axis (2a) of the second shaft part (2), while the connection between the second joint disc (4) and the second shaft part (2) is produced by two connection elements (6-4) provided in a fourth plane (E2*) which is vertical to the third plane (E1*) and contains the rotational axis (2a) of the second shaft part (2), on both sides of this rotational axis (2a).

3. A steering column according to claim 2, wherein when the steering column has not been fitted in the vehicle, the first plane (E1) and the third plane (E1*) substantially coincide (i.e. within usual tolerances) and the second plane (E2) and the fourth plane (E2*) substantially coincide.

4. A steering column according to any one of the preceding claims, wherein provided in or on the intermediate piece (5) and/or on the joint disc(s) (3, 4) are openings or spacers (D) which allow the bending angle, mentioned in claim 1, of the steering column without a collision between joint disc (3, 4) and intermediate piece (5) or between joint disc (3, 4) and associated shaft part (1, 2).

5. A steering column according to any one of the preceding claims, **characterised in that** the two joint discs (3, 4) are formed differently such that they are configured for different effective ranges, more especially for different frequencies in respect of acoustic decoupling.

## Revendications

1. Colonne de direction d'un véhicule comprenant une première partie d'arbre et une seconde partie d'arbre (1, 2) qui sont reliées entre elles par l'intermédiaire d'un dispositif d'articulation du type joint de cardan comprenant un premier joint universel à disque ayant l'élasticité du caoutchouc et un second joint universel à disque ayant l'élasticité du caoutchouc (3, 4), co-axialement l'une derrière l'autre dans la direction axiale et sans déformation élastique des joints universels à disque (3, 4) dans le cadre des tolérances habituelles,
**caractérisée en ce que**
entre les deux joints universels à disque (3, 4) il est prévu une pièce intermédiaire (5) indépendante des deux parties d'arbre (1, 2) en ce qui concerne sa liberté de mouvement, et reliée aux parties d'arbre (1, 2), par l'intermédiaire des joints universels à disque (3, 4) à la manière d'un joint de cardan de sorte qu'à l'état monté de la colonne de direction, selon une vue latérale adaptée, les axes de rotation (1a, 2a) des deux parties d'arbre (1, 2) définissent un angle de fléchissement (β) de la colonne de direction du fait de la déformation élastique des deux joints universels à disque (3, 4).

2. Colonne de direction conforme à la revendication 1,
dans laquelle la liaison de type joint de cardan est réalisée de sorte que, dans la direction axiale de la colonne de direction non montée sur le véhicule et ainsi sans déformation élastique des joints universels à disque (3, 4), la liaison entre la première partie d'arbre (1) et le premier joint universel à disque (3) soit obtenue par deux éléments de liaison (6-1) situés dans un premier plan (E1) contenant l'axe de rotation (1a) de la première partie d'arbre (1), de part et d'autre de cet axe de rotation (1a), tandis que la liaison entre le premier joint universel à disque (3) et la pièce intermédiaire (5) est obtenue par deux éléments de liaison (6-2) situés dans un second plan (E2) perpendiculaire au premier plan (E1) et contenant également l'axe de rotation (1a) de la première partie d'arbre (1), de part et d'autre de cet axe de rotation (1a), et que la liaison entre la pièce intermédiaire (5) et le second joint universel à disque (4) soit obtenue par deux éléments de liaison (6-3) situés dans un troisième plan (E1*) contenant l'axe de rotation (2a) de la seconde partie d'arbre (2), de part et d'autre de cet axe de rotation (2a) de la seconde partie d'arbre (2) tandis que la liaison entre le second joint universel à disque (4) et la seconde partie d'arbre (2) est obtenue par deux éléments de liaison (6-4) situés dans un quatrième plan (E2*) perpendiculaire au troisième plan (E1*) et contenant l'axe de rotation (2a) de la seconde partie d'arbre (2), de part et d'autre de cet axe de rotation (2a).

3. Colonne de direction conforme à la revendication 2,
dans laquelle, lorsque la colonne de direction n'est pas montée dans le véhicule, le premier plan (E1) et le troisième plan (E1*) coïncident essentiellement (c'est-à-dire dans le cadre des tolérances habituelles) tandis que le second plan (E2) et le quatrième plan (E2*) coïncident essentiellement.

4. Colonne de direction conforme à l'une des revendications précédentes,
dans laquelle sur ou dans la pièce intermédiaire (5) et/ou sur le/les joint(s) universel(s) à disque (3, 4) sont prévus des évidements ou des éléments d'écartement (D) qui permettent d'obtenir l'angle de fléchissement de la colonne de direction mentionné dans la revendication 1 sans collision entre les joints universels à disque (3, 4) et la pièce intermédiaire (5) ou entre les joints universels à disque (3, 4) et la partie d'arbre (1, 2) associée.

5. Colonne de direction conforme à l'une des revendications précédentes,
**caractérisée en ce que**
les deux joints universels à disque (3, 4) sont conformés différemment de sorte qu'ils soient dimensionnés concernant le découplage acoustique selon différentes zones d'action, en particulier selon différentes fréquences.
